# EUROPEAN PATENT SPECIFICATION

(11) **EP 2 993 061 B1**
(45) Date of publication and mention of the grant of the patent: **26.04.2017**
(21) Application number: 15183245.8
(22) Date of filing: 01.09.2015
(51) Int. Cl.: B60C 1/00, C08L 9/00

(54) **PNEUMATIC TIRE WITH POST CURE SEALANT LAYER**
LUFTREIFEN MIT NACHHÄRTUNGSDICHTUNGSSCHICHT
PNEUMATIQUE POURVU D'UNE COUCHE DE MATÉRIAU D'ÉTANCHÉITÉ POST-DURCISSEMENT

(30) Priority: 05.09.2014 US 201462046592 P; 17.07.2015 US 201514801870
(43) Date of publication of application: 09.03.2016
(73) Proprietor: The Goodyear Tire & Rubber Company, Akron, Ohio 44316 (US)
(72) Inventor: KASZAS, Gabor, Akron, OH Ohio 44313 (US); RACHITA, Michael Joseph, North Canton, OH Ohio 44720 (US)
(74) Representative: Kutsch, Bernd

(56) References cited:
- EP-A1- 2 610 072
- WO-A1-2013/093608
- US-A- 2 827 098
- US-A1- 2014 138 004

## Description

### Field of the Invention

Various methods, sealants and tire constructions have been suggested for pneumatic tires relating to the use of liquid sealant coatings in which the sealant flows into a puncture hole. However, such liquid sealants can flow excessively at elevated temperatures and cause the tire to become out of balance. Also, the liquid sealant may not be entirely operable or effective over a wide temperature range extending from summer to winter conditions. More complicated tire structures which encase a liquid sealant in a vulcanized rubber material can be expensive to manufacture and can also create balance and suspension problems due to the additional weight required in the tire.

Puncture sealing tires also have been further proposed wherein a sealant layer of degradable butyl based rubber, for example, is assembled between unvulcanized tire layers to provide a built-in sealant. By laminating the sealant layer between two or more non-degraded rubber layers, e.g., the tire inner liner and a tire carcass, the sealant layer retains its structural integrity during the vulcanization operation where high pressures are applied to the tire, which would otherwise displace the degraded rubber layer from its desired location. However, the compounds that typically are used in the built-in sealant, e.g., organic peroxide depolymerized butyl based rubber, can generate gases at higher temperature, such as during the tire cure or during tire use, which can result in aesthetically unappealing inner liner blister formation. Aside from being unappealing, such blister formation may allow the sealant to unfavorably migrate away from its intended location. To combat blister formation, the inner liner, for example, can be provided at an increased thickness but this can add to the cost of building a tire.

It is also known to directly apply sealant layers to tires after the cure process, or post cure. Such sealant layers generally are adhesively secured to the exposed surface of the innermost inner liner, and may be tacky and gel-like. Such post cure sealants as known in the art may not provide adequate long term seal against puncturing objects such as nails and the like.

Accordingly, there is a need for an improved post cure sealant layer for tires.

### Summary of the invention

The invention relates to a pneumatic tire in accordance with claim 1 and to a method in accordance with claim 11.

Dependent claims refer to preferred embodiments of the invention.

In a preferred aspect, the present invention is directed to a pneumatic tire comprising a radially outer circumferential rubber tread disposed on a supporting carcass, an inner liner rubber layer radially inwardly disposed on the supporting carcass, and a sealant layer adhered to and disposed inwardly of the rubber inner liner layer as a radially inner surface of the tire, wherein the sealant layer comprises 100 parts by weight of an ionomer, and from 100 to 900 parts by weight of a diluent.

### Drawings

Figure 1 shows a cross-sectional view of a pneumatic tire which contains a circumferential sealant layer which contains a post tire cure applied sealant layer adhered to the innerliner.
Figure 2 shows a partial cross-sectional view of a portion of the tire with a post-tire cure applied sealant layer.

### Description

There is disclosed a pneumatic tire comprising a radially outer circumferential rubber tread disposed on a supporting carcass, preferably an inner liner rubber layer radially inwardly disposed on the supporting carcass, and a sealant layer adhered to and disposed inwardly of the rubber inner liner layer as a radially inner surface of the tire, wherein the sealant layer comprises 100 parts by weight of an ionomer, and from 100 to 900 parts by weight of a diluent.

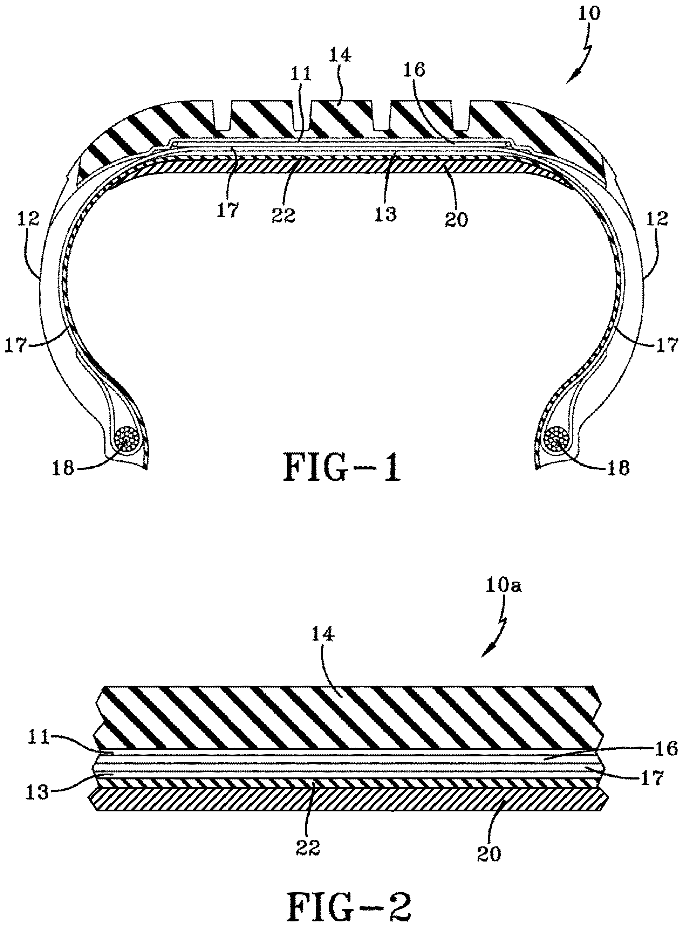

In FIG. 1, a cross-section of a cured pneumatic tire 10 is presented comprising a tread 14 which includes a tread base rubber layer 11, sidewalls 12, spaced apart beads 18 and carcass underlying the tread 14 (including the tread base layer 11), comprising cord reinforced (e.g. wire cord reinforced) rubber belt plies 16, one ore more cord reinforced (e.g. synthetic nylon or polyester cord reinforced) rubber carcass plies 17 and an optional rubber barrier layer 13 with inner liner rubber layer 22 being positioned radially inward of the carcass. The optional barrier layer 13 and the carcass ply 17 together with a sealant layer 20 form the radially innermost surface of the tire. The sealant layer 20 is of a composition comprising an ionomer and a diluent. The sealant layer 20 is the radially innermost layer and forms at least locally under the tread 13 the inner surface of the tire 10 facing the tire cavity.

The sealant layer 20 includes an ionomer. Suitable ionomers include halobutyl rubber combined with nitrogen or phosphorus nucleophiles. Thus the ionomer may be described as the reaction product of a halobutyl rubber with a nitrogen or phosphorous nucleophile.

Halobutyl rubber includes bromobutyl and chlorobutyl rubbers. Bromobutyl rubber includes brominated copolymers of C₄ to C₇ isoolefins with C₄ to C₁₄ conjugated dienes and optionally other co-polymerizable monomers. In one embodiment, the bromobutyl rubber is a brominated copolymer of isoprene and isobutylene.

Nitrogen or phosphorus nucleophiles includes compounds of formula I 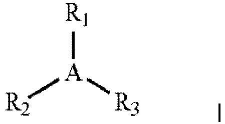 where A is a nitrogen or phosphorus; and R₁, R₂ and R₃ are selected from the group consisting of linear or branched C₁-C₁₈ alkyl substituents, an aryl substituent which is monocyclic or composed of fused C₄-C₈ rings, and/or a hetero atom selected from, for example, B, N, O, Si, P, and S.

In general, the appropriate nucleophile will contain at least one neutral nitrogen or phosphorus center which possesses a lone pair of electrons which is both electronically and sterically accessible for participation in nucleophilic substitution reactions. Suitable nucleophiles include trimethylamine, triethylamine, triisopropylamine, tri-n-butylamine, trimethylphosphine, triethylphosphine, triisopropylphosphine, tri-n-butylphosphine, and triphenylphosphine.

Other suitable nucleophiles include substituted azoles as disclosed in US-A-2012/0157579. In one embodiment, the nucleophile is N-butyl imidazole, N-(trimethylsilyl)imidazole, N-decyl-2-methylimidazole, N-hydroxyethyl imidazole, N-(3-trimethoxysilylpropyl)imidazole, N-vinylimidazole, 2-(imidazol-1-yl)ethyl 2-methyl-2-propenoate, 1-butylbenzimidazole, or a combination thereof.

The amount of nucleophile reacted with the butyl rubber is preferably in the range from 0.1 to 1.5 molar equivalents, more preferably 0.15 to 1.0 molar equivalents, based on the total molar amount of allylic halide present in the halobutyl polymer.

The ionomer is preferably present in the sealant in an amount of 100 parts by weight.

In one embodiment, the ionomer is a bromobutyl based ionomer available commercially as X_Butyl™ 14565P from Lanxess.

The sealant layer also includes a diluent. Suitable diluents include low molecular weight elastomers with a number average molecular weight Mn ranging from 500 to 10,000 (measured using vapor pressure osmometry). Low molecular weight elastomers include low molecular weight polyisoprene, polyisobutylene, polybutadiene, butyl rubber, and the like. Suitable diluent is miscible, or viscoelastically compatible with the ionomer. The diluent is present in the sealant in an amount ranging from 100 to 900 parts by weight, per 100 parts by weight of ionomer. In one embodiment, the diluent is present in the sealant in an amount ranging from 200 to 600 parts by weight, per 100 parts by weight of ionomer, or ranging from 200 to 300 parts by weight.

In one embodiment, the diluent is a polybutene. By polybutene, it is meant a polymer of one or more butene isomers including 1-butene, 2-butene, and 2-methylpropene (isobutylene). The polybutene may be commercially referred to as polyisobutylene.

Such polybutenes preferably have a number average molecular weight exceeding 1000 to minimize the possibility of migration from the sealant layer into adjacent tire components. It is preferably prepared by polymerizing an isobutylene rich stream with a metal halide catalyst and preferably has a polymer backbone structure resembling polyisobutylene. Very suitable polybutenes are available under the trademark Indopol. In one embodiment, the number average molecular weights (Mn) of the polybutene from 1000 to 2500, as determined by vapor pressure osmometry.

In one embodiment, the polybutene is present in the sealant in an amount ranging from 100 to 900 parts by weight, per 100 parts by weight of ionomer (phr). In one embodiment, the polybutene is present is an amount ranging from 200 to 600 parts by weight, per 100 parts by weight of ionomer.

Generally, the total elastomer in the sealant will comprise the ionomer and diluent.

Oils may be included in the sealant as a viscosity modifier. Suitable oils include oils such as mineral oils including but not limited to aromatic oils, naphthenic oils, paraffinic oils, MES oils, TDAE oils, RAE oils, and SRAE oils, and vegetable oils including but not limited to sunflower oil, soybean oil, corn oil, castor oil, and canola oil.

Resins may also be included in the sealant as a tackifier. Suitable resin include hydrocarbon resins, phenol/acetylene resins, rosin derived resins and mixtures thereof. Representative hydrocarbon resins include coumarone-indene-resins, petroleum resins, terpene polymers and mixtures thereof. Phenol/acetylene resins may be derived by the addition of acetylene to butyl phenol in the presence of zinc naphthlate. Additional examples are derived from alkylphenol and acetylene.

The sealant composition may be cured by crosslinking during the mixing process in order to achieve additional structural strength of the composition. This can be achieved by crosslinking the allylic halide units which have not been converted to ionomeric units. Alternatively it is possible to add small amounts of regular butyl to the composition with the purpose of providing additional crosslink points to adjust the viscosity of the composition.

There are numerous cure system available to crosslink the remaining allylic halide units of the ionomer. These are crosslinking them by sulfur alone, magnesium oxide, by the use of ZnO in combination of a fatty acid such as stearic acid, by peroxide alone such as dicumyl peroxide or using peroxide in combination with multifunctional coagents, such as 1,3 butylene glycol dimethylacrylate, zinc diacrylate, trimethylol propane trimethacrylate, triallyl trimesate, N,N'-m-phenylenedimaleimide. Crosslinking of allylic halide units can also be achieved by the use of primary or secondary aliphatic or aromatic amines or primary or secondary amine containing trialkoxy silanes, such as gamma-aminopropyl-triethoxysilane. It is also known to the art that higher degree of state of cure can be achieved by the combination of ZnO with aromatic amines such as diphenylamine, diphenyl-p-phenylenediamine, p-octyldiphenylamine, and the low temperature addition product of diphenylamine and acetone. It is also known that the crosslinking of the halobutyl can be achieved by the use of bifunctional dienophyles alone such as N,N'-m-phenylenedimaleimide.

Crosslinking of the regular rubber constituents may be effected by one of the known sulfur or quinoid systems. In the quinoid curing system, p-quinone dioxime and p,p-di-benzoylquinone dioxime are preferred as the curing agents. Other suitable curing agents include dibenzoyl-p-quinone dioxime, p-dinitrosobenzene and N-methyl-N, 4-dinitrosoanilene. The crosslinking activators which may be employed in the sealant composition include organic peroxides (including diaryl peroxides, diacyl peroxides and peroxyesters. In one embodiment, the curing agent/crosslinking activator combination is p-quinone dioxime and benzoyl peroxide combination. The preferred concentration of p-quinone dioxime is 2-4% by weight of regular butyl rubber. The preferred concentration of benzoyl peroxide is 7-10% by weight of regular butyl rubber.

Other conventional compounding ingredients may be included in the mixing process, including but not limited to filler such as carbon black, silica, and calcium carbonate, antidegradants, colorants, and the like.

Reaction of the nucleophile with the halobutyl rubber may be accomplished for example by combining the nucleophile and rubber in a rubber mixer such as a Brabender internal mixer, conical mixer, extruder, or the like. The halobutyl polymer and the nucleophile can be reacted for 10 to 90 minutes, preferably from 15 to 60 minutes and more preferably from 20 to 30 minutes at temperatures ranging from 80 to 200 °C, preferably from 90 to 160 °C, and more preferably from 100 to 140 °C. Following reaction and curing, the sealant composition is applied to the innerliner of a cured tire. A suitable process for mixing the sealant and applying to a tire innerliner is as disclosed in US-B-8,821,982.

FIG. 2 depicts a partial cross-section of the sulfur cured pneumatic tire 10, labeled as 10a in FIG. 2, comprising the tire tread 14 with its tread base rubber layer 11, wire cord reinforced rubber belt plies 16, carcass with a synthetic cord reinforced rubber carcass ply 17 (e.g. synthetic fiber based cord such as, for example, nylon or polyester cord), an optional rubber barrier layer 13, a rubber inner liner 22 and a sealant layer 20. The sealant layer 20 is applied to the inner liner 22 of the already cured tire (and is therefore a post tire cure applied sealant layer) to provide a tire with a sealant layer with puncture sealing properties against various puncturing objects.

The thickness of the circumferential sealant layer 20 can vary depending somewhat upon the degree of sealing ability desired as well as the tire itself, including the tire size and intended tire use. For example, the thickness of the sealant layer may range from 0.13 cm (0.05 inches) to 1.9 cm (0.75 inches) depending somewhat upon the tire itself and its intended use. For example, in passenger tires, the sealant layer 20 might, for example, have a thickness in a range of 0.33 cm (0.125 inches) whereas for truck tires, the sealant layer 20 might, for example, have a thickness in a range of 0.76 cm (0.3 inches). The post cured tire applied sealant layer 20 is generally situated in the crown region of the tire 10, and, if desired, may include colorant so that it is of a non-black color that may contrast with the black colored inner liner, tread, or sidewall so that a tire puncture can be noticed.

The tire inner liner rubber layer 22 may comprise a conventional sulfur curable rubber inner liner for use in pneumatic tires. In one example, the rubber innerliner 22 can be a sulfur curative-containing halobutyl rubber composition of a halobutyl rubber such as for example chlorobutyl rubber or bromobutyl rubber. Such halobutyl rubber based inner liner layer may also contain one or more sulfur curable diene-based elastomers such as, for example, c is 1,4-polyisoprene natural rubber, c is 1,4-polybutadiene rubber and styrene/butadiene rubber, or mixtures thereof. The inner liner 22 is normally prepared by conventional calendering or milling techniques to form a strip of uncured compounded rubber of appropriate width. When the tire 10 is cured, the inner liner 22 becomes co-cured and thereby integral with, the tire 10. Tire inner liner rubber layers and their methods of preparation are well known to those having skill in such art.

### Example

In this example, the effect of a sealant composition on the ability to seal a puncture in a rubber sample is illustrated. In this example, the ionomer is formed in situ in the mixer, upon reaction of bromobutyl rubber with the nucleophile triphenyl phosphine. A sealant composition was mixed in a 60 liter conical twin mixer (Colmec CTM-95) with amounts given in Table 1 in phr based on the amount of bromobutyl rubber. The addition sequence is also indicated in Table 1. Bromobutyl rubber was first mixed with magnesium oxide, calcium carbonate and a majority of the polybutene, followed by addition of the triphenyl phosphine and finally the remainder of the polybutene. In the mixer, the diathermic unit was set at 40 °C at start. The batch temperature was kept in the range 105 to 110 °C from the end of the bromobutyl rubber breakdown until the start of the addition of the polybutene. The temperature was then lowered to 85-90 °C and kept in this range by the adjustment of rotor speed.

**Table 1.**

| | Amount | | Addition Sequence |
|---|---|---|---|
| | (kg) | (phr) | |
| Bromobutyl 2222 | 18.28 | 100 | 1 |
| Magnesium oxide | 0.58 | 3.2 | 2 |
| Calcium Carbonate | 5.80 | 31.7 | 2 |
| Polybutene¹ | 5.80 | 31.7 | 2 |
| Polybutene¹ | 26.50 | 145 | 3 |
| Triphenyl Phosphine² | 0.59 | 3.2 | 4 |
| Polybutene¹ | 7.45 | 40.8 | 5 |

| | | | |
|---|---|---|---|
| ¹ Polyisobutylene as Indopol H-300 from Ineos. Mₙ = 1,300 g/mol. ²Triphenyl phosphine pellets from BASF | | | |

### Results of the sealability test conducted at room temperature.

A series of holes of various diameter were drilled into a cured rubber mat consisting of sequential layers of tread compound, reinforcement material, and innerliner compound, each layer being 2 mm thick. The rubber mat was cooled with liquid nitrogen before holes with diameters of 1 mm, 2 mm and 3 mm were drilled. Cured sealant compound was dispensed on silicon coated paper which was then cut to the required sample size and transferred to the rubber mat, followed by removal of the paper. Nails with diameter of 5 mm were inserted in the pre-drilled holes. The sample was then pressurized to 2.5 bars, followed by removal of the nails. The holes were then visually inspected immediately after nail removal and 20 hours after nail removal, with results as given in Tables 2 and 3 below.

Samples were cured in a press for 30 minutes at 160 °C.

**Table 2.**

| **Status immediately after nail removal** | | | | **Status 20 hours after nail removal** | | | |
|---|---|---|---|---|---|---|---|
| | **Hole # 1** | **Hole #2** | **Hole #3** | | **Hole #1** | **Hole #2** | **Hole #3** |
| **Hole 1 mm Nail 5mm** | sealed | sealed | sealed | **Hole 1 mm Nail 5mm** | sealed | sealed | sealed |
| **Hole 2mm Nail 5mm** | sealed | sealed | sealed | **Hole 2mm Nail 5mm** | sealed | sealed | sealed |
| **Hole 3mm Nail 5mm** | sealed | sealed | sealed | **Hole 3mm Nail 5mm** | sealed | sealed | sealed |

As seen in Table 2, the sealant successfully sealed all of the nail holes in the test substrate.

## Claims

1. A pneumatic tire comprising a radially outer circumferential rubber tread (14) disposed on a supporting carcass (17) and a sealant layer (20) forming at least locally a radially inner surface of the tire (10), wherein the sealant layer (20) comprises an ionomer and from 100 to 900 parts by weight, per 100 parts by weight of ionomer (phr), of a diluent.

2. The pneumatic tire of claim 1 wherein the tire (20) further comprises an inner liner rubber layer (22) disposed radially inwardly on the supporting carcass (17) and wherein the sealant layer (20) is at least locally adhered to and disposed radially inwardly of the rubber inner liner layer (22).

3. The pneumatic tire of claim 1 or 2, wherein the ionomer is the reaction product of a halobutyl rubber and a nucleophile of formula I 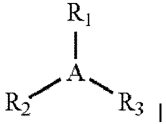 where A is a nitrogen or phosphorus; and R₁, R₂ and R₃ are selected from the group consisting of linear or branched C₁-C₁₈ alkyl substituents, an aryl substituent which is monocyclic or composed of fused C₄-C₈ rings, and/or a hetero atom preferably selected from B, N, O, Si, P and S.

4. The pneumatic tire of at least one of the previous claims, wherein the halobutyl rubber is a bromobutyl rubber.

5. The pneumatic tire of at least one of the previous claims, wherein the diluent is polybutene or polyisobutylene.

6. The pneumatic tire of at least one of the previous claims, wherein the diluent is at least one low molecular weight elastomer with a number average molecular weight Mw in a range of from 500 to 10,000, alternatively from 1000 to 2500.

7. The pneumatic tire of at least one of the previous claims, wherein the sealant further comprises at least one of oil and resin.

8. The pneumatic tire of at least one of the previous claims, wherein the ionomer is the reaction product of a halobutyl rubber and an azole.

9. The pneumatic tire of claim 7, wherein the azole is selected from the group consisting of N-butyl imidazole, N-(trimethylsilyl)imidazole, N-decyl-2-methylimidazole, N-hydroxyethyl imidazole, N-(3-trimethoxysilylpropyl)imidazole, N-vinylimidazole, 2-(imidazol-1-yl)ethyl 2-methyl-2-propenoate, 1-butylbenzimidazole, or a combination thereof.

10. The pneumatic tire of at least one of the previous claims, comprising 200 to 600 phr of the diluent or 200 to 300 phr of the diluent.

11. A method of manufacturing a sealant composition for use in a sealant layer (20) of a pneumatic tire (10), the method comprising preparing in situ in a mixer a mixture of a diluent and an ionomer, wherein the ionomer is the reaction product of a halobutyl rubber and a nucleophile of formula I 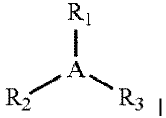 where A is a nitrogen or phosphorus; and R₁, R₂ and R₃ are selected from the group consisting of linear or branched C₁-C₁₈ alkyl substituents, an aryl substituent which is monocyclic or composed of fused C₄-C₈ rings, and/or a hetero atom preferably selected from B, N, O, Si, P and S.

12. The method of claim 11 wherein the halobutyl rubber is a bromobutyl rubber and the diluent polybutene or polyisobutylene.

13. The method of claim 11 or 12 wherein the nucleophile is triphenylphosphine, trimethylamine, triethylamine, triisopropylamine, tri-n-butylamine, trimethylphosphine, triethylphosphine, triisopropylphosphine, tri-n-butylphosphine or a combination thereof or an azole.

14. The method of at least one of the claims 11 to 13 wherein the halobutyl rubber is added to the mixer, then a part of the diluent is added to the mixer, then the nucleophile is added to the mixer and then the remainder of the diluent is added to the mixer.

15. The method of at least one of the claims 11 to 14, further comprising adding at least one or more of the following to the mixer: magnesium oxide, calcium carbonate, oil and a resin; and/or wherein the mixer is Brabender internal mixer, a conical mixer, or an extruder, preferably a twin-screw extruder or a ring extruder.

## Patentansprüche

1. Luftreifen, umfassend eine radial äußere umfangsgerichtete Kautschuklauffläche (14), die auf einer tragenden Karkasse (17) angeordnet ist, und eine Dichtungsschicht (20), die mindestens örtlich eine radial innere Oberfläche des Reifens (10) bildet, wobei die Dichtungsschicht (20) ein lonomer und 100 bis 900 Gewichtsteile, je 100 Gewichtsteile lonomer (phr), eines Verdünners umfasst.

2. Luftreifen nach Anspruch 1, wobei der Reifen (20) weiter eine Innenisolierungs-Kautschukschicht (22) umfasst, die radial einwärts auf der tragenden Karkasse (17) angeordnet ist, und wobei die Dichtungsschicht (20) mindestens örtlich an der Innenisolierungs-Kautschukschicht (22) angeheftet und radial einwärts davon angeordnet ist.

3. Luftreifen nach Anspruch 1 oder 2, wobei das lonomer das Reaktionsprodukt ist eines Halobutylkautschuks und eines Nukleophils der Formel I 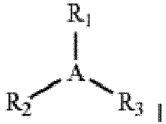 wobei A ein Stickstoff oder Phosphor ist; und R₁, R₂ und R₃ aus der Gruppe ausgewählt sind, bestehend aus linearen oder verzweigten C₁-C₁₈-Alkylsubstituenten, einem Arylsubstituenten, der monozyklisch ist oder aus miteinander verbundenen C₄-C₈-Ringen zusammengesetzt ist, und/oder einem Heteroatom, bevorzugt ausgewählt aus B, N, O, Si, P und S.

4. Luftreifen nach mindestens einem der vorhergehenden Ansprüche, wobei der Halobutylkautschuk ein Brombutylkautschuk ist.

5. Luftreifen nach mindestens einem der vorhergehenden Ansprüche, wobei der Verdünner Polybuten oder Polyisobutylen ist.

6. Luftreifen nach mindestens einem der vorhergehenden Ansprüche, wobei der Verdünner mindestens ein Elastomer mit niedriger Molmasse mit einer zahlenmittleren Molmasse Mw im Bereich von 500 bis 10.000, alternativ von 1.000 bis 2.500 ist.

7. Luftreifen nach mindestens einem der vorhergehenden Ansprüche, wobei das Dichtmittel weiter mindestens eines von Öl und Harz enthält.

8. Luftreifen nach mindestens einem der vorhergehenden Ansprüche, wobei das lonomer das Reaktionsprodukt eines Halobutylkautschuks und eines Azols ist.

9. Luftreifen nach Anspruch 7, wobei das Azol aus der Gruppe ausgewählt ist, bestehend aus N-Butylimidazol, N-(Trimethylsilyl)imidazol, N-decyl-2-methylimidazol, N-Hydroxyethylimidazol, N-(3-Trimethoxysilylpropyl)imidazol, N-Vinylimidazol, 2-(Imidazol-1-yl)ethyl 2-methyl-2-propenoat, 1-Butylbenzimidazol oder einer Kombination davon.

10. Luftreifen nach mindestens einem der vorhergehenden Ansprüche, umfassend 200 bis 600 phr des Verdünners oder 200 bis 300 phr des Verdünners.

11. Verfahren zur Herstellung einer Dichtmittelzusammensetzung zur Anwendung in einer Dichtungsschicht (20) eines Luftreifens (10), wobei das Verfahren das in situ in einem Mischer Herstellen eines Gemischs aus einem Verdünner und einem lonomer umfasst, wobei das Ionomer das Reaktionsprodukt ist eines Halobutylkautschuks und eines Nukleophils der Formel I 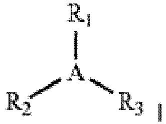 wobei A ein Stickstoff oder Phosphor ist; und R₁, R₂ und R₃ aus der Gruppe ausgewählt sind, bestehend aus linearen oder verzweigten C₁-C₁₈-Alkylsubstituenten, einem Arylsubstituenten, der monozyklisch ist oder aus miteinander verbundenen C₄-C₈-Ringen zusammengesetzt ist, und/oder einem Heteroatom, bevorzugt ausgewählt aus B, N, O, Si, P und S.

12. Verfahren nach Anspruch 11, wobei der Halobutylkautschuk ein Brombutylkautschuk ist und der Verdünner Polybuten oder Polyisobutylen.

13. Verfahren nach Anspruch 11 oder 12, wobei das Nukleophil Triphenylphosphin, Trimethylamin, Triethylamin, Triisopropylamin, Tri-n-butylamin, Trimethylphosphin, Triethylphosphin, Triisopropylphosphin, Tri-n-butylphosphin oder eine Kombination davon oder ein Azol ist.

14. Verfahren nach mindestens einem der Ansprüche 11 bis 13, wobei der Halobutylkautschuk dem Mischer zugesetzt wird, dann ein Teil des Verdünners dem Mischer zugesetzt wird, dann das Nukleophil dem Mischer zugesetzt wird und dann der Rest des Verdünners dem Mischer zugesetzt wird.

15. Verfahren nach mindestens einem der Ansprüche 11 bis 14, weiter das Zusetzen von mindestens einem oder mehreren der folgenden zu dem Mischer umfassend: Magnesiumoxid, Kalziumkarbonat, Öl und ein Harz; und/oder wobei der Mischer ein Brabender-Innenmischer, ein Konusmischer oder ein Extruder ist, bevorzugt ein Doppelschneckenextruder oder ein Ringextruder.

## Revendications

1. Bandage pneumatique comprenant une bande de roulement circonférentielle en caoutchouc (14) externe en direction radiale disposée sur une carcasse de support (17) et une couche (20) faisant office d'agent d'étanchéité formant au moins localement une surface interne du bandage pneumatique (10) en direction radiale, dans lequel la couche (20) faisant office d'agent d'étanchéité comprend un ionomère, et de 100 à 900 parties en poids, par 100 parties en poids de l'ionomère (phr), d'un diluant.

2. Bandage pneumatique selon la revendication 1, dans lequel le bandage pneumatique (20) comprend en outre une couche de caoutchouc (22) faisant office de calandrage intérieur disposée à l'intérieur de la carcasse de support (17), en direction radiale, et dans lequel la couche (20) faisant office d'agent d'étanchéité adhère au moins localement à la couche de caoutchouc (22) faisant office de calandrage intérieur et est disposée à l'intérieur de ladite couche, en direction radiale.

3. Bandage pneumatique selon la revendication 1 ou 2, dans lequel l'ionomère est le produit réactionnel d'un caoutchouc halogénobutyle et d'un nucléophile répondant à la formule I : 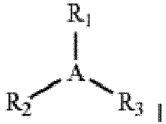 dans laquelle A représente un atome d'azote ou un atome de phosphore ; et R₁, R₂ et R₃ sont choisis parmi le groupe constitué par des substituants alkyle en C₁-C₁₈ à chaîne droite ou ramifiée, un substituant aryle de type monocyclique ou qui se compose de noyaux fusionnés en C₄-C₈, et/ou un hétéroatome choisi de préférence parmi un atome de bore, un atome d'azote, un atome d'oxygène, un atome de silicium, un atome de phosphore et un atome de soufre.

4. Bandage pneumatique selon au moins une des revendications précédentes, dans lequel le caoutchouc halogénobutyle est un caoutchouc bromobutyle.

5. Bandage pneumatique selon au moins une des revendications précédentes, dans lequel le diluant est du polybutène ou du polyisobutylène.

6. Bandage pneumatique selon au moins une des revendications précédentes, dans lequel le diluant représente au moins un élastomère à bas poids moléculaire dont le poids moléculaire moyen en nombre Mw se situe dans la plage de 500 à 10.000, en variante de 1.000 à 2.500.

7. Bandage pneumatique selon au moins une des revendications précédentes, dans lequel l'agent d'étanchéité comprend en outre au moins un élément choisi parmi une huile et une résine.

8. Bandage pneumatique selon au moins une des revendications précédentes, dans lequel l'ionomère représente le produit réactionnel d'un caoutchouc halogénobutyle et d'un azole.

9. Bandage pneumatique selon la revendication 7, dans lequel l'azole est choisi parmi le groupe constitué par le N-butyl imidazole, le N-(triméthylsilyl)imidazole, le N-décyl-2-méthylimidazole, le N-hydroxyéthyl imidazole, le N-(3-triméthoxysilylpropyl)imidazole, le N-vinylimidazole, le 2-méthyl-2-propénoate de 2-(imidozol-1-yl)éthyle, le 1-butylbenzimidazole, ou une de leurs combinaisons.

10. Bandage pneumatique selon au moins une des revendications précédentes, comprenant de 200 à 600 phr du diluant ou de 200 à 300 phr du diluant.

11. Procédé de préparation d'une composition d'un agent d'étanchéité pour son utilisation dans une couche 20 faisant office d'agent d'étanchéité, d'un bandage pneumatique 10, le procédé comprenant la préparation in situ dans un mélangeur, d'un mélange d'un diluant et un ionomère, dans lequel l'ionomère est le produit réactionnel d'un caoutchouc halogénobutyle et d'un nucléophile répondant à la formule I : 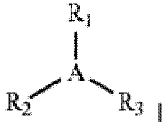 dans laquelle A représente un atome d'azote ou un atome de phosphore ; et R₁, R₂ et R₃ sont choisis parmi le groupe constitué par des substituants alkyle en C₁-C₁₈ à chaîne droite ou ramifiée, un substituant aryle de type monocyclique ou qui se compose de noyaux fusionnés en C₄-C₈, et/ou un hétéroatome choisi de préférence parmi un atome de bore, un atome d'azote, un atome d'oxygène, un atome de silicium, un atome de phosphore et un atome de soufre.

12. Procédé selon la revendication 11, dans lequel le caoutchouc halogénobutyle est un caoutchouc bromobutyle et le diluant est du polybutène ou du polyisobutylène.

13. Procédé selon la revendication 11 ou 12, dans lequel le nucléophile est la triphénylphosphine, la triméthylamine, la triéthylamine, la triisopropylamine, la tri-n-butylamine, la triméthylphosphine, la triéthylphosphine, la triisopropylphosphine, la tri-n-butylphosphine, ou une de leurs combinaisons, ou un azole.

14. Procédé selon au moins une des revendications 11 à 13, dans lequel on ajoute le caoutchouc halogénobutyle au mélangeur, on ajoute ensuite une partie du diluant au mélangeur, ensuite on ajoute le nucléophile au mélangeur et on ajoute ensuite le reste du diluant au mélangeur.

15. Procédé selon au moins une des revendications 11 à 14, comprenant en outre l'addition au mélangeur d'au moins un ou plusieurs éléments choisis parmi les suivants : de l'oxyde de magnésium, du carbonate de calcium, de l'huile et une résine ; et/ou dans lequel le mélangeur est un mélangeur interne de type Brabender, un mélangeur de configuration conique ou une extrudeuse, de préférence une extrudeuse à double vis sans fin ou une extrudeuse de configuration annulaire.
